# EUROPEAN PATENT APPLICATION

(11) **EP 2 952 415 A1**
(43) Date of publication of application: **09.12.2015**
(21) Application number: 14397518.3
(22) Date of filing: 04.06.2014
(51) Int. Cl.: B62D 25/20

(54) **A plywood floor plate, a method for detaching a plywood floor plate from a chassis frame, and checking quality of the attachment**

(71) Applicant: UPM-Kymmene Wood Oy, 15140 Lahti (FI)
(72) Inventor: Marttila, Pasi, 15540 Villähde (FI); Koponen, Simo, 15880 Hollola (FI)
(74) Representative: Tampereen Patenttitoimisto Oy

(57) **Abstract**

The invention relates to a method for detaching a plywood floor plate for a chassis of a freight transport vehicle or a trailer from a chassis frame of a freight transport vehicle or a trailer.

An embodiment of the invention comprises a method for detaching a plywood floor plate for a freight transport vehicle from a chassis frame for a freight transport vehicle. The plywood floor plate comprises veneers attached to each other. Detaching the plywood floor plate and the chassis frame attached to each other via an adhesive joint comprises causing local tensile stress between the plywood floor plate and the chassis frame

## Description

### Field of the application

The application relates to a method for detaching a plywood floor plate for a chassis of a freight transport vehicle or a trailer from a chassis frame of a freight transport vehicle or a trailer. Further the application relates to a method for checking quality of attachment of the plywood floor plate and the chassis frame, and to the used plywood floor plate.

### Background

Floorings for freight transport vehicles or trailers are normally made of various floor plates of wood-based material which are fixed at their edges, next to each other or one after the other, to the frame beams of the frame of the freight transport vehicle or trailer. The wood-based floor plates used at present are made of plywood board, or solid wood board coated with a suitable coating, or wood-based composite boards with a plastic coating, for example.

The floor plates are vulnerable to wear. Freight loaded onto the floor plates may be heavy and/or have irregular shape. The floor may achieve unstable load, which may cause uneven wear of the floor and/or impulse peaks. The floor may be damaged during loading or transportation. Parts of the floor are to be changed to new ones at certain time intervals, typically depending on their condition. Broken or weak parts are replaced for ensuring safe transportation. During change or a service break, a freight transport vehicle or a trailer cannot be used.

### Summary

An object of the application is to have a short maintenance break for a freight transport vehicle or trailer flooring. This may be achieved by enabling efficient change of floor plates.

An embodiment concerns a method for detaching a plywood floor plate for a freight transport vehicle from a chassis frame for a freight transport vehicle. The plywood floor plate comprises veneers attached to each other. Detaching the plywood floor plate and the chassis frame attached to each other via an adhesive joint comprises causing local tensile stress between the plywood floor plate and the chassis frame.

An embodiment concerns a method for testing an adhesive joint attachment between a plywood floor plate for a freight transport vehicle and a chassis frame for a freight transport vehicle. The plywood floor plate comprises veneers attached to each other. Testing the adhesive joint between the plywood floor plate and the chassis frame comprises causing local tensile stress between the plywood floor plate and the chassis frame for detaching them. The method for testing may comprise an initial crack in the adhesive joint and causing local tensile stress arranged to proceed the initial crack in the adhesive joint. The method may comprise tracing the proceeding of the crack.

An embodiment comprises a plywood floor plate for a freight transport vehicle, wherein the plywood floor plate comprises veneers attached to each other. The veneers comprise a grain direction, wherein the plywood comprises veneers oriented such that at least surface veneers of the plywood and/or at least 5 veneer layers of the plywood comprise cross oriented grains in relation to their adjacent veneers. The plywood floor plate is arranged attachable to a chassis frame of the freight transport vehicle and detachable from it.

### Description of the Drawings

Some embodiments of the invention are illustrated in more detail by the attached drawings. The attached drawings are not in scale.
- Fig. 1: shows an example of a frame of a freight transporting trailer according to an embodiment of the invention.
- Fig. 2: shows an example flooring of the freight transporting trailer according to an embodiment of the invention.
- Fig. 3: shows an example flooring of the freight transporting trailer according to an embodiment of the invention.
- Fig. 4: shows an example flooring of the freight transporting trailer according to an embodiment of the invention.
- Fig. 5a: shows a side view of a freight transport vehicle comprising a chassis frame and floor plates according to an embodiment of the invention.
- Fig. 5b: shows a side view of a freight transport vehicle comprising a chassis frame and floor plates according to an embodiment of the invention.
- Fig. 5c: shows a side view of a freight transport vehicle comprising a chassis frame and floor plates according to an embodiment of the invention.
- Fig. 6: shows a method for detaching a floor plate from a chassis frame of the freight transporting trailer according to an embodiment of the invention.
- Fig. 7: shows an embodiment of the invention.

### Detailed Description

The embodiments are described in further detail referring to the accompanying Figures.

According to an embodiment local tensile stress is caused over the adhesive joint between the chassis frame and the plywood floor plate. This may be implemented using a wedge, a jack or a lever mechanism, for example. A detaching means causes local tensile force or local tensile stress between a chassis frame and a floor plate. When the caused local tensile stress exceeds adhesive resistance or internal strength of the adhesive joint, the adhesive joint may start to break and tear off.

In this application, a freight transport vehicle refers to a vehicle intended for the transportation of various bulk freight of solid material, for example a truck, a semi-trailer with a bolster-type truck, a full trailer hauled by a truck, a delivery van or pickup, or another similar vehicle or articulated vehicle which is known as such and moving on rubber-tired wheels, the vehicle and/or the trailer comprising a particular load space or body that is intended solely for the transportation of various freight or bulk freight of said kind. The term freight transport vehicle or trailer also covers such trains and cars moving on rails that are only intended for the transportations of freight and above-mentioned bulk freight. Furthermore, the term freight transport vehicle or trailer also covers, for example, various trailers to be hauled by a car, a van, a tractor, or a dune buggy. However, cars, tractors or dune buggies as such cannot be regarded as freight transport vehicles intended in this application.

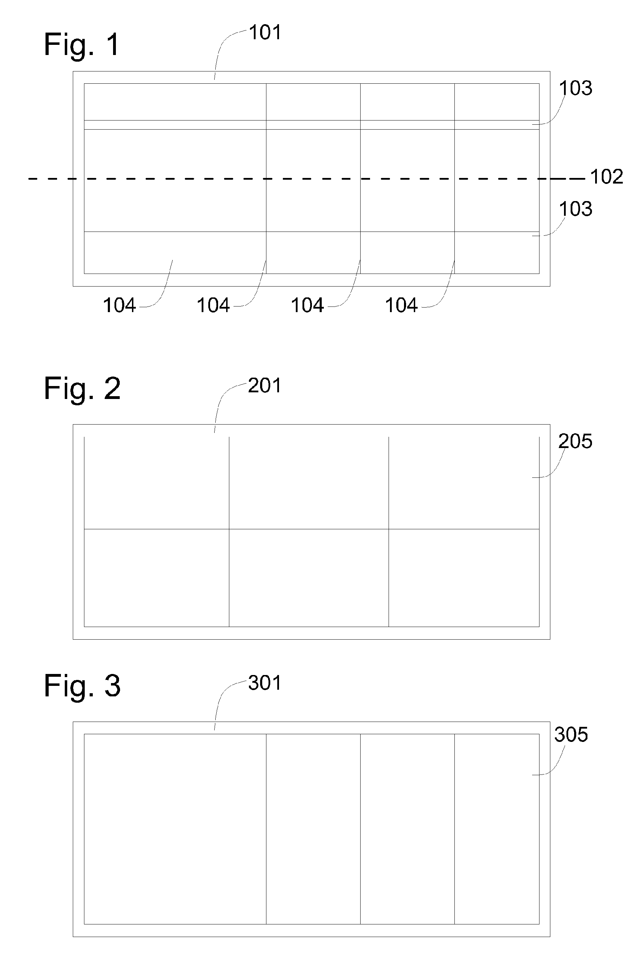

Figure 1 shows an example of a chassis frame of a freight transporting trailer according to an embodiment of the invention. The chassis frame comprises an edge profile 101, wherein vertical side walls of the trailer can be attached. The chassis frame comprises pair of longitudinal beams 103 and plurality of transversal beams 104. The transversal beams 104 are also called intermediate beams or cross members. The transversal beams 104 are attached perpendicularly to the longitudinal beams 103. The transversal beams 104 are within a certain distance from each other. The longitudinal beams 103 are situated to both sides of the longitudinal central line 102 of the trailer. The longitudinal beams are situated between the central line 102 and side edge profiles 101 parallel to the central line 102. The longitudinal beams 103 may comprise thickness of 8.0-20.0 mm, for example 8.0-12.0 mm. The transversal beams 104 may comprise thickness of 2.0-6.0 mm, preferably 3.5-5.0 mm, for example 4.5 mm. The edge profile 101 of the frame may comprise thickness of 2.0-5.0 mm, preferably 3.0-4.0 mm.

Profile of the transversal beams 104 vary. Also placement of the transversal beams 104 in relation to the edge profile 101 may vary in different frame structures. A transversal beam 104 may comprise I-profile. A transversal beam 104 may comprise U-profile with additional arms extending horizontally from the ends of the vertical branches of the U-profiles. According to another example, the transversal beam comprises a Z- profile. In yet another example, the profile of the transversal beam is formed of two Z-profiles being placed next to each other so that the upper vertical arms of the Z-profiles are connected together by means of an suitable connecting element. Any of the described transversal beams may be fixed to longitudinal frame beams 103 by welding them to the side surfaces of the vertical web plates of the longitudinal frame beams 103. The type of transversal beam used in certain location depends on the other constructional elements of the frame around that location. In some embodiments, the transversal beams 103 form a part of a flat surface for facing the flooring comprising floor plates.

According to an embodiment a transport chassis frame of a freight transport vehicle is provided. The chassis frame comprises an edge frame structure, which is forming the upmost surface level of the transport chassis. If edge or border portion of a floor plate surface is at a higher level (vertically) than the edge frame structure of the chassis frame, either the floor plate edge or border gets broken or the transportable goods/packages are violated due to uneven surface. The chassis frame comprises frame beams, and the floor plates are attached to the frame beams of the chassis frame with an adhesive joint. The adhesive joint may comprise sole adhesive, adhesive and elastic parts, adhesive tape, or alike. Adhesive shall be capable of adhering a metal frame and the floor plate tightly in order to sustain use, packing, transport, load, unpacking, and so on. Typically industrial trucks are used to load and unload items onto chassis frame floor plates. The surface of the transport chassis comprises the flooring plates and the edge frame structure. In at least some of the embodiments, difference in thickness of the chassis edge frame structure and longitudinal/transversal beams corresponds to the thickness of the adhesive joint. The chassis edge frame structure forms the upmost surface level, either equal with or upper than the surface made of the attached floor plates. In practice, chassis frame structures may comprise edge frame structure and frame beams having difference in levels of their upper surfaces. It is possible to rise the edge frame of the chassis frame, and/or lower the frame beams in order to provide the desired difference in level. The exact difference in level depends on used floor plates and/or adhesive joint thickness.

Figure 2 shows an example flooring of the freight transporting trailer according to an embodiment of the invention. The freight transporting trailer frame may be like the one described with Figure 1. Flooring of Figure 2 comprises plurality of floor plates 205. The floor plates 205 are arranged on a chassis frame so that their longitudinal direction corresponds to the longitudinal direction of the chassis frame, or direction of motion of the trailer. The floor plates 205 are attached one after another between the longitudinal beams 203 and transversal beams 104 of the frame of Figure 1. The floor plates 205 have rectangular form. Longitudinal edges of the rectangular floor plates 205 are against the longitudinal frame beams 103 and the longitudinal edge profile 101 of the frame. The transversal edge of the rectangular floor plates 205 is facing transversal edge of an adjacent floor plate. At the end portions of the frame, the transversal edge of the rectangular floor plate 205 is facing transversal edge profile 101 of the frame.

Figure 3 shows an example flooring of the freight transporting trailer according to an embodiment of the invention. The freight transporting trailer frame may be like the one described with Figure 1. Flooring of Figure 3 comprises plurality of rectangular floor plates 305. The floor plates 305 are arranged on a chassis frame so that their longitudinal direction corresponds to the cross direction of the chassis frame, or is perpendicular to the direction of motion of the trailer. The floor plates 305 are attached next to each other so that longitudinal edge of the rectangular floor plates is facing a longitudinal edge of an adjacent floor plate. The longitudinal (longer) edge of the endmost rectangular floor plates 305 is facing the transversal (shorter) profile of the rectangular frame 101. The transversal (shorter) edges of the rectangular floor plates 305 are facing the longitudinal (longer) edge profile of the rectangular frame 101.

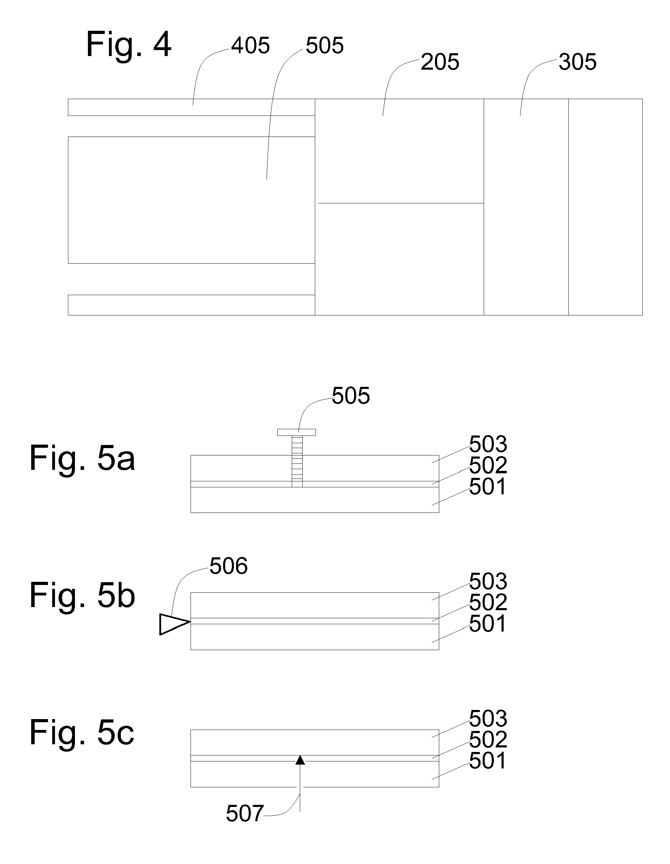

Figure 4 shows an example flooring of the freight transporting trailer according to an embodiment of the invention. Figure 4 comprises floor plates 305 oriented transversally in relation to the frame profile, as described with Figure 3. Figure 4 comprises floor plates 205 oriented longitudinally in relation to the frame profile, as described with Figure 2. Figure 4 comprises floor plates 305 arranged to elongate longitudinally between the longitudinal frame beams of the frame (103 in Figure 1). Figure 4 comprises floor plates 405 arranged between the longitudinal edges of the frame profile (101 in Figure 1) and longitudinal frame beams (103 in Figure 1). Figure 4 comprises floor plates 505 arranged to be attached to the longitudinal beams (103) of the chassis frame. Floor plates 505 are wider than floor plates 405.

The floor plates 205, 305, 405, 505 have been bonded to the transversal beams (104 in Figure 1). The floor plates 205, 305 and 405 have been additionally bonded to longitudinal frame beams (103 in Figure 1). An embodiment may comprise different kind of flooring elements, as shown in Figure 4, one kind of flooring elements, as shown in Figures 2 or 3, or any mixture of these. For usability upper surface of flooring elements shall be at the same level. In other words flooring elements shall form a flat surface. In a side view an upward construction of Figures 2-4 shall comprise as little as possible, if any, difference of height, level difference or unevenness at the flooring surface. As is seen in Figures 2 and 3, the edge profile 101 of the frame is advantageously at the same level with the flooring.

The floor plates are attached on the upper face side of the chassis frame beams. Adhesive joint is supplied onto the upper surface of the chassis frame beams in order to attach floor plates onto the chassis frame beams.

The amount of the floor plates used for forming a flooring may vary. The flooring may be comprise as many floor plates as there are open spaces between the longitudinal frame beams and transversal frame beams. In another embodiments one floor plate might cover two or more that kind of open spaces. The floor plates can be formed of plywood. Also other materials are possible, such as wood-based plate materials, for example composite or solid wood board. These floor plate materials may be coated with some suitable hard and durable material layers which can be phenolic resin layer or some other resin or plastic having corresponding durability and mechanical properties. The floor plate may have similar coating on both surfaces. Alternatively, upper surface of the floor plate, which forms the surface for the flooring, comprises another kind of coating, or is structured, for example according to wire or track. Lower surface of the floor plate, which is facing the adhesive joint, may be coated, for example with phenolic film.

According to an embodiment a floor plate may comprise plywood board, chipboard, wood fibre board, composite or solid wood board with a coating. A floor plate comprises a planar structure, where two opposing surfaces are at a distance from each other. The surfaces often form a rectangular, or other right-angled elongated structure. The distance between the two opposing surfaces of a floor plate may be 3-50 mm, for example, whereas area of the surface is many times larger, for example 0.5-5 m². Density of the plywood may be over 600 kg/m³. At least surface veneer(s) of the plywood comprise density of 600 kg/m³ or more. A floor plate according to at least some/all example embodiments comprise plywood, which comprises veneers attached to each other. Veneers may be made of birch, pine, beech or other suitable woods. The plywood may be a mixed plywood or a birch plywood. At least surface veneer(s) of the plywood may comprise birch. The plywood may be made of birch veneers. Birch provides strong and thin structure, which may be braced with adhesive between the veneer layers. Both surfaces of a plywood floor plate may comprise the same or similar structure. Such plywood floor plate may be used similarly on its both sides, or without a need to select a side of a plywood floor plate when utilized. A dense structure may enhance actions of a screw, for example penetrating via threads and/or gripping.

Veneers of a plywood floor plate may be oriented. Orientation of a veneer corresponds to a direction of grains in a veneer. Grain direction of veneers of a plywood may be selected. Grain direction may be selected so that a plywood comprises at least 5 veneer layers in cross direction in relation to a next veneer layer. A plywood may comprise a cross grain orientation in at least one or two surface veneers. A plywood may comprise a cross grain orientation in at least two of its middle veneers. A plywood comprising cross oriented veneers may share forces in two directions, for example during unscrewing. Thus detaching may be easier compared to a plywood of parallel oriented veneers. A plywood lacking cross oriented structure may crack easier due to tension. In cross oriented plywood, it may be possible to place a screw or other means closer to edge parts of the plywood without damaging or breaking the plywood. In order to enhance detachment, a plywood comprising birch veneers comprising cross grain direction and adhered on side portions may be used. Cross grain direction of veneers may provide strength and stiffness to the plywood structure. It may share forces in two directions and avoid too strong local load to one direction only. It may aid in providing enough energy to or over an adhesive joint, for example for testing the adhesive joint. If the plywood is weaker or gets broken, it may not be possible to test the adhesive joint.

Veneers may comprise thickness of 1-5 mm preferably 1.1-4.0 mm. The veneers may be manufactured using slicing, die cutting or rotary cutting, for example. Veneers may be attached to each other using phenolic resin. In at least some embodiments a liquid resin is utilized in order to attach veneers of the plywood. Plywood comprising rotary cut veneers provides strong and stable plywood for a strength floor plate. An unbending floor plate enables handy attachment of a floor plate, whereas a bent floor plate may require more work and/or manufacturing phases in order to form substantially flat floor surface. Plywood comprising veneers provides a rigid structure. This enables use of separate floor plates and accordingly simpler processing, treatment, handling and/or installation of plates of convenient size. A continuous, one-piece floor plate is not required. Strength properties of the plywood may be predetermined and adjusted at the desired direction(s). For example wood type of veneers, manufacturing method of veneers, adhesive between veneers, density of plywood and/or coating of plywood have effect on plywood strength properties. In an embodiment at least one surface of the plywood is coated. Any coating suitable for a plywood is applicable. A coating may be attached using hot-pressing. Coating may comprise phenolic resin, melamine, polyamide, polypropylene or polypropylene with primer layer. Coating may provide enhanced adhesion for the surface.

In an embodiment at least one surface of the plywood is coated with phenolic resin layer. The plywood comprises a phenolic resin coating at least on a surface facing the frame. The opposing surface of the plywood may be structured, or coated with another suitable coating. Preferably the plywood comprises a phenolic resin coating on its both surfaces. The phenolic resin may comprise film impregnated phenolic resin. In an embodiment the film comprises paper. In an alternative embodiment, the film is paper. Plywood coating has effect of providing good adhesion between the adhesive, for example polyurethane, and phenolic coating of the plywood. A phenolic resin surface has an effect of providing a good attachment via the adhesive layer. A phenolic resin coating may have effect of shielding wood-based portions and/or providing a coating resistant to moisture. According to embodiments the plywood plates arranged next to each other in order to form a flooring are attached to each other on their edges with film impregnated resin or adhesive, or adhesive in liquid form. Preferably seams between the plywood plates of flooring are attached with adhesive in liquid form. According to embodiments plywood coating comprises liquid coating or film impregnated coating. Preferably the plywood coating comprises film impregnated coating.

The adhesive joint used for bonding the floor plates may comprise one-component polyurethane adhesive, or for example some two-component type adhesive such as epoxy adhesive or two-component polyurethane adhesive. Adhesive joint may comprise or consist of adhesive paste or adhesive tape. Adhesive joint may comprise elastic members. Elastic members in the adhesive joint have effect of maintaining certain distance between the chassis frame and the plywood flooring on it. According to at least some embodiments, the used adhesive joint is such that newly added adhesive sticks to older one. Even if some adhesive is left on a chassis frame during detachment, new adhesive can be applied onto it. The used adhesive forms a base for a new adhesive forming an adhesive joint between a chassis frame and a floor plate.

An adhesive is arranged onto parts of floor plates, which are arranged to be faced with and attached to the chassis frame. The adhesive is provided on chassis frame or on areas of a floor plate surface, wherein the floor plate surface and the chassis frame are facing each other. Adhesive is arranged onto or against an edge part of one surface of the floor plate comprising two surfaces. According to an embodiment adhesive is provided along circumference of the floor plate, or on a chassis frame facing the circumference of the floor plate. In at least some embodiments, an adhesive is further provided onto at least some middle portion of the floor plate surface, or onto corresponding part(s) of the chassis frame. The adhesive joint according to embodiments comprises thickness of 0.5-5 mm, preferably 2-4, or for example 3 mm, or 2 mm. An adhesive joint, for example an adhesive wake, may comprise width of 5.0-35 mm. The adhesive joint may comprise adhesive tape. The adhesive tape comprises two-sided adhesive surface. The adhesive tape may comprise self-adhesive pressure sensitive adhesive. The adhesive tape may be porous or foam-like, for example it may comprise acryl foam. An adhesive joint on a chassis frame remains narrow compared to the frame area (upper surface) even after the floor plate has been attached to the frame with the adhesive. According to embodiments amount of adhesive provides strength for the adhesion. Further it protects against cohesive failures. In accordance to at least some embodiments, the adhesive is applied on a frame chassis as a continuous wake. Alternatively, a continuous adhesive tape is used. Continuous adhesive joint provides tight reliable joint of equal quality. There may be no remarkable differences in thickness of the adhesive joint. Thickness of the adhesive joint may comprise some variations. Thickness of the adhesive joint may comprise locally double thickness compared to an average thickness of the adhesive joint. This has effect of forming a moisture-resistant joint. Further, an amount of adhesive is enough to form a durable joint and good attachment between a frame chassis and a floor plate. For example, a chassis frame may comprise width of 10 cm and adhesive wake may comprise width of 1-2 cm. Generally, the adhesive wake is left on a chassis frame and remains narrow compared to the chassis frame even after the floor plate has been attached to the chassis frame with the adhesive. If broader adhesive wake is desired, for example for a wider chassis frame, more adhesive may be provided and then expanded on a chassis frame when attaching a floor plate. To ensure certain thickness of the adhesive, even under pressure, elastic members or adhesive tape may be utilized. The floor plate may be put on adhesive and its own weight may expand the adhesive so that thickness of the adhesive layer between the chassis frame and the floor plate corresponds to the thickness of elastic spacers between the chassis frame and the floor plate. The floor plate may be pressed in order to place it on a correct position and level. This may aid expanding adhesive and providing even surface layer of the floor plate. Continuous adhesive tape of equal thickness enables forming adhesive joint of uniform quality. Further, adhesive joint enables compensating small differences in evenness of the attachable surfaces.

Figure 5a shows an embodiment according to the invention. A chassis frame 501 of a freight transport vehicle may comprise steel or metal. A floor plate 503 may comprise plywood comprising veneers attached to each other. The floor plate 503 is attached to the chassis frame 501 via an adhesive joint 502. The adhesive joint may comprise adhesive tape, adhesive wake, adhesive paste and/or elastic spacers. In order to detach the chassis frame 501 from the floor plate 503 a local tensile stress or a tensile force is caused over the adhesive joint 502. The floor plate 503 is pulled apart from the chassis frame 501. In the embodiment of the Figure 5a, a screw 504 is driven through the floor plate 503, against the chassis frame 501. Detaching means of the Figure 5a may comprise a fastener. Detaching means is for example a screw or a bolt or alike means. Detaching means of the Figure 5a comprise helical ridge or threads. When the screw 504 is driven against the chassis frame 501, transversal stretch is caused across the adhesive joint 502. Threads of the screw 504 rotate into plywood of the floor plate 503. There is a mechanical connection between the threads and the plywood. Threads of the screw 504 grip to the material of the floor plate 503. The screw 504 is driven against the chassis frame 501 and will not protrude it. The screw 504 driven against the chassis frame 501 causes local tensile stress over the adhesive joint 502. The caused local tensile stress is arranged to lift the floor plate 503 upwards, away from the chassis frame 501. The adhesive joint 502 may tear perpendicular to the stress caused over it, when local tensile force caused over adhesive joint 502 exceeds adhesive resistance of the adhesive joint 502.

The detaching means may comprise a blade portion, which may be arranged to form a local stress peak to the adhesive joint. This may induce a crack, which may proceed. On the other hand, in case the plywood floor plate breaks, this may be used as a test method. This may indicate that the adhesive joint is strong. If adhesive is removed from a surface during detachment, new primer is introduced to the surface before attaching a new plywood floor plate. A remaining adhesive, after a detachment, may be used a primer for the newly attachable plywood floor plate.

In an example, a hole may exist or be drilled through a plywood. An assembling part may be hit to the hole. An assembling part may comprise a bush or a bolster or alike. End of the assembling part may be arranged to pivot against the chassis frame and/or under the floor plate. In addition, the assembling part may comprise mating part or counter threads so that a screw may be inserted and driven against the mating counter threads. The screw threads with the counter threads of the assembling part may arrange detaching force over the adhesive joint and/or between the chassis frame and the floor plate. An assembling part may provide strength to plywood. For example, screwed floor plate may have less friction force between the screw and the floor plate compared to a non-screwed floor plate. Screws of a screwed floor plate will get loose during a period of time. Screw heads tend to sink deeper in the floor plate during a period of time. Plywood floor plate may have some compression, which may decrease gripping surface between screw and plywood. The assembling part may provide further strength and enhance gripping between screw threads and plywood floor plate. A local tensile stress overriding internal strength or resistance of the adhesive joint may be provided. In the embodiment of the Figure 5a detachment means may be arranged to protrude through the floor plate 503. The assembling part comprise counter threads for the threads of the detaching means 504. The assembling part may have legs arranged to bend or pivot below the floor plate 503. The assembling part may have effect of strengthening and/or securing gripping between the detaching means 504 and the floor plate 503. The assembling part may provide additional force via its edges or surrounding of the hole in the floor plate 503, for example counter threads. Alternatively or in addition the assembling part may provide additional force from below of the floor plate, for example via its legs bent below the floor plate.

Detaching means according to embodiment of the Figure 5a are longer compared to the combined thickness of the floor plate and the adhesive joint. Detaching means may comprise length of 5-100 mm, for example 70 mm or 80 mm. Standard sized screws may be utilized. Detaching means are arranged to and suitable for causing local tensile stress. A screw may comprise a wood screw. A point of the screw may be non-hardened or non-annealed. A screw may be drilled into wood-based material, like plywood. A screw may not be drilled into metal or steel. Detaching means, for example a screw, may comprise length corresponding to combined thickness of a plywood floor plate and adhesive joint, and added with 5-20 mm, preferably 10-20 mm. Thus length of a screw may correspond to combined thickness of a floor plate and an adhesive joint added with tightening spare of the screw. Diameter of a screw may comprise 2.5 - 30.0 mm; preferably 3 - 20mm, more preferably 5 - 15 mm.

Figure 5b shows an embodiment according to the invention. In order to detach the chassis frame 501 from the floor plate 503 a local tensile stress or force is caused over the adhesive joint 502. In the embodiment of the Figure 5b, a wedge 505 is arranged between the floor plate 503 and the chassis frame 501. Detaching means of the Figure 5b may comprise a wedge, a claw bar, a crow bar, a cramp or a like means suitable for providing lever effort between the chassis frame 501 and the floor plate 503. The floor plate 503 and the chassis frame 501 may be wedged, levered or bent apart from each other. The wedge 505 is arranged on the adhesive joint 502 in order to cause local tensile stress over it. The wedge 505 maybe used alternatively or in addition to other means for causing tensile stress over the adhesive joint 502 according to embodiments.

Figure 5c shows an embodiment according to the invention. In order to detach the chassis frame 501 from the floor plate 503 a local tensile stress or force is caused over the adhesive joint 502. In the embodiment of the Figure 5c, a jack, for example a hydraulic jack, is arranged to cause force between the chassis frame 501 and the floor plate 503. For example, a jack may be arranged to push towards the floor plate 503, in the direction of arrow 506. The jack may be supported on the ground. According to embodiment of the Figure 5c the force for causing local tensile stress is arranged on wider area compared to a point load of the embodiment of the Figure 5a, for example. The force is arranged on an area of a floor plate 503, as shown with arrow 506. The stress over the adhesive joint is caused via the force towards the floor plate 503. The local tensile stress has effect between the chassis frame 501 and the floor plate 503 and/or to the adhesive joint 502.

Other alternatives to realize tensile force over the adhesive joint are possible.

According to at least some/all embodiments an adhesive joint may keep the attached floor plate and chassis frame at a certain distance from each other. This may enable inserting detaching means to the adhesive joint, against adhesive joint, against chassis frame and via the adhesive joint, cross the adhesive joint, against floor plate and/or alike. Detaching means are used to cause local tensile stress over the adhesive joint and/or between the chassis frame and the floor plate. The distance between the chassis frame and the floor plate also enables placing and using cutting means. Earlier cutting means have been utilized without detaching means or causing local tensile stress according to embodiments. However, the adhesive joint is elastic and relatively soft. Thus, use of sole cutting means may lead to a situation, where the cutting means stick to the adhesive joint instead of cutting the adhesive joint. For example a blade of a cutting mean rubs back and forth towards the already cut adhesive joint. This may cause friction, slow down movement of the blade, disable cutting and stick the blade to the adhesive. This kind of drawback is avoided with detaching and/or detaching means according to embodiments. Detaching according to embodiments provides effect of speeding up change of floor plates. Although cutting an adhesive joint may originally provide a challenge, the provided stress and/or induced force may provide smooth proceeding of cutting means in the adhesive joint. Thus cutting the adhesive joint may be made possible. Further this may allow testing the adhesive joint in a controlled manner.

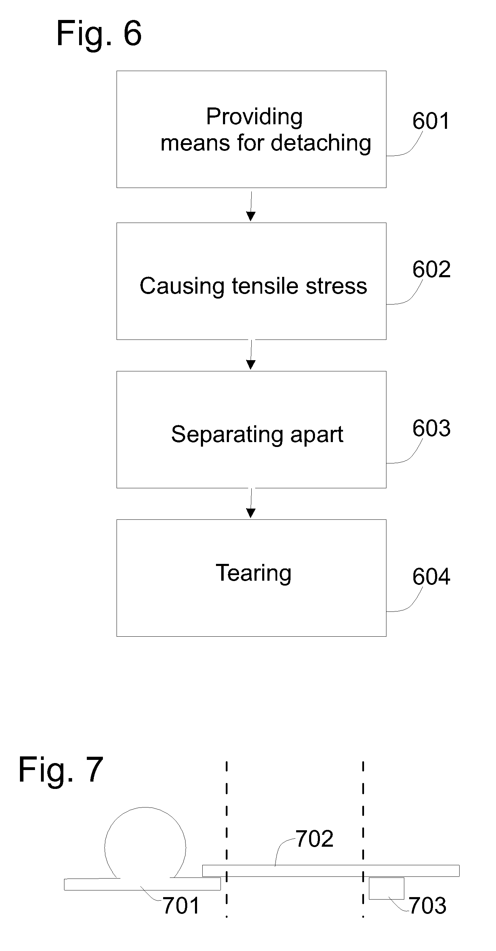

According to an embodiment there is provided a method for detaching a floor plate and a chassis frame of a freight transport vehicle. The embodiment is illustrated in Figure 6. There is an adhesive joint between the floor plate and the chassis frame, as presented in the Figures 5abc. The method comprises providing means for detaching 601. Means for detaching are placed between the plywood floor plate and the chassis frame attached to each other via an adhesive joint. The method according to an embodiment comprises causing local tensile stress or tensile force 602 between the plywood floor plate and the chassis frame. The local tensile stress may be caused over the adhesive joint. According to at least some embodiments local tensile stress is caused by detaching means. The detaching means comprise at least one of a screw, a wedge, a jack, a lever mechanism or threads. According to an embodiment the local tensile stress is caused by threads. The method may comprise causing gripping force between the plywood and the threads. The method may comprise causing friction between the plywood and the threads. Causing local tensile stress 602 over an adhesive joint may comprise driving a screw through a plane of the plywood floor plate, against the chassis frame. In an embodiment, causing local tensile stress 602 comprises driving a screw through a plane of the plywood, against the chassis frame, and causing a tensile force between the plywood floor plate and the chassis frame by the screw threads, wherein the tensile force is arranged to move the plywood floor plate apart from the chassis frame 603.

The local tensile stress causes drawing the adhesively attached plywood floor plate away from the chassis frame. When the detaching force overrides the attaching force, the floor plate and the chassis frame are separated apart 603. Eventually the caused local tensile stress exceeds the resistance of the adhesive, or attachment of the adhesive joint with the surface of the chassis frame or the floor plate, or strength of adhesive joint or floor plate structure. The floor plate and the chassis frame are arranged to move apart from each other 604. The adhesive joint may tear. Alternatively or in addition, surface of the chassis frame, for example paint on it, may tear off. Alternatively or in addition the floor plate, or coating or veneers of it, may broke, for example tear in layers. This may depend on the parts in the location of the caused local tensile stress, part properties and qualities at the time, and their relation with each other. The weakest part or point starts to tear first.

In an embodiment, the method further comprises placing means for cutting between the plywood floor plate and the chassis frame comprising a tensile force between them. The method comprises placing means for cutting in the adhesive joint between the floor plate and the chassis frame, and cutting the adhesive joint using means for cutting. The means for cutting may comprise a cutting tool, a cutting wire, an oscillating tool, a wedge piece, a wire, a piano wire, or other suitable tool. Means for cutting may comprise cutting edge of less than 3 mm; preferably less than 2 mm, or less than 1 mm. For example a blade of an oscillation tool may comprise a cutting edge of a blade of less than 2 mm. A wire of a detaching means may comprise diameter of less than 2 mm; or less than 1 mm. Before placing means for cutting, it is possible to make a space in the adhesive joint with the means for detaching. The cutting may be implemented by cutting, drilling, milling or sawing. The adhesive joint according to at least some embodiments provides a gap between the attached chassis frame and the floor plate. The chassis frame and the floor plate are not in touch. During detaching, the cutting means placed between the chassis frame and the floor plate are used for cutting the adhesive joint. For example a wire is pulled through the adhesive joint. The adhesive joint may comprise adhesive paste or adhesive tape or adhesive and elastic spacers. This may provide a certain thickness for the adhesive joint. For example adhesive comprising polyurethane and elastic spacers may be cut in similar manner than an adhesive tape or adhesive paste/wake, using similar means. The means for cutting slice the adhesive joint. The adhesive joint may be cut into two parts so that it remains partly at surface of a frame beam, and partly at a surface of a floor plate. Thus the adhesive joint layer between the frame beam and a floor plate is cut. The caused local tensile stress, and pulling the floor plate and the chassis frame away from each other enables detaching with similar means, even when thickness of the adhesive joint is small, for example around 1 mm. In this embodiment means for cutting do not stick to the adhesive joint due to local tensile stress caused over it. This enables effective and fast cutting of adhesive joint and/or separation of the floor plate and the chassis frame. Means for cutting are used for cutting the adhesive joint over which a local tensile stress is caused.

According to an embodiment, the plywood floor plate is cut in pieces before causing the local tensile stress between the plywood floor plate piece and the chassis frame. Parts of the floor plate that are not in touch with the chassis frame may be cut out. This may be implemented by sawing parts of the floor plate. Sawing or cutting may be done roughly between chassis frame parts, or close to a chassis frame part, wherein adhesive joint adheres the floor plate to the chassis frame. Cutting may be implemented onto the chassis frame part, next to adhesive joint on it. When thickness of the adhesive joint is known, saw blade may be adjusted to cut the floor plate without touching the chassis frame below it. After parts of the floor plate are cut out, adhesive joint is revealed on its side, as a side profile between the floor plate and the chassis frame. The adhesive joint may be approached straight towards it, for example via wedge or leverage, instead of via the floor plate on it. The remaining floor plate parts adhered to the chassis frame have smaller area and may be easier to handle. The local tensile stress may be pointed to the correct point, straight to the adhesive joint. Further, it is visible which part will start tearing, which parts are tearing off and how the tearing off proceeds. In addition, this enables placing cutting means towards the lengthwise side of the adhesive joint profile comprising local tensile stress over it.

Whether pre-cutting the floor plate(s) in pieces is used, depends at least partly on chassis frame. The chassis frame may comprise metal parts, for example high-strength steel. Thickness of chassis frame parts may vary. Different forms of chassis frame parts (beams) comprise different properties. For example I-profile beam is different and manufactured differently compared to Z-profile beam. Ω-profile or Z-profile of a cross member may be comprise thickness of 4-5 mm, whereas for example longitudinal edge profile may comprise thickness of less than 3 mm. Local tensile stress caused according to embodiments may cause pressure to the chassis parts and/or profiles. Pre-cutting the floor plates may avoid causing too much pressure to the chassis parts and/or profiles. The chassis parts are not harmed during changing flooring parts. In some cases there is a gap between a cross member and an edge profile of a chassis frame. The floor plate or fold of it may be inserted to the gap. Pre-cutting the floor plate may be advantageous for detaching the floor plate from the gap. When floor plates of relatively big areas are utilized and/or no chassis beams are visible from top of the flooring, cutting or sawing is implemented, for example lengthwise, i.e. towards the moving direction of the trail. This enables better accessing the adhesive joint. This causes counter forces to a certain cross member at a time. The forces towards the chassis frame parts may be controlled.

Figure 7 shows an embodiment of the invention. Edge profile 701 of the chassis frame comprises Ω-profile. The floor plate 702 is adhesively attached to the edge profile 701 and the beam 703 of the chassis frame. If tensile force is caused over the adhesive joint between the chassis frame beam 703 and the floor plate 702, it may cause unwanted pressure to the edge profile 701 of the chassis frame. This may cause bending to the edge profile 701 or to an edge of it. In order to avoid harming the edge profile 701, the floor plate 702 is cut before local tensile stress according to embodiments is caused between the floor plate 702 and chassis frame. Example cutting lines are illustrated with dashed lines in the Figure 7.

An embodiment relates a test method for checking quality of the adhesive joint and/or adhering a floor plate and a chassis frame and/or quality of parts. Causing local tensile stress or tensile force over an adhesive joint according to at least some/all embodiments may be utilized for checking quality of the adhesive joint. In addition to providing fast and enhanced cutting, and easy and fast detachment, the at least some/all embodiments may enable checking that the adhesive has provided a proper adhesion between a floor plate and a chassis frame. In at least some embodiments, some adhesive remains on the chassis frame after a floor plate has been detached. Advantageously no wood-material or coating of the floor plate exists at the chassis frame after detachment.

According to at least some embodiments, it is possible to evaluate, test and follow-up the strength, quality and adhesiveness of the adhesive joint. Local tensile stress is caused over the adhesive joint in order to detach chassis frame and floor plate. This may be done with or without cutting means or a cutting tool. A small crack or distortion may be caused to the adhesive joint by the cutting tool. A size of a crack may be controlled and adjusted according to test, tested character, quality and/or issue. After an opening crack, a plywood floor plate is broken off from a chassis frame. The crack proceeds during tearing and tends to proceed towards the weakest point of structure(s). If the crack separating the floor plate and the chassis frame proceeds to paint layer of the chassis frame, it may reveal weak point(s) in the paint and/or in the primer that may need to be enhanced. Weakness of a floor plate may cause for example some surface layer(s) of it to be broken during tearing and separating the floor plate from the chassis frame. Also imperfections at the adhesive layer may be revealed similarly. The weakest point may be double-checked by starting with new opening crack and checking whether it proceeds towards the same point of weakness again. If after the detachment, no adhesive is left on the chassis frame, there may be need to check primer layer. At least paint should remain on the chassis frame. If the chassis frame lacks paint after detachment of the floor plate, new primer may be advantageous. It is a desired situation that the adhesive joint is at least partly left over the chassis frame after detachment. It is possible that the floor plate is the weakest part, thus it breaks during detachment. In this case, there are adhesive joint and parts of wooden floor plate on the chassis frame after the detachment. If the adhesive joint is strong, the floor plate may broke.

After detachment according to at least some embodiments, some adhesive may be left on a chassis frame. This existing adhesive may be used as primer for the new adhesive, for attaching the new floor plate replacing the previous one. The chassis frame, from which a floor plate have been removed, is cleaned, but no new primer is required. If paint tears off from the chassis frame, cleaning and new base paint are utilized to replace the previous paint. If some wooden parts or coating tears off from the floor plate and is left on the adhesive, it is cut off from the adhesive. When paint of the chassis frame or parts of the floor plate are left on the adhesive after detachment, it shows that strength of the adhesive has exceeded strength or attachment of other parts. This may shows that quality of the adhesive has been good, at least compared to other parts. It may lead to investigating properties of plywood of the floor plate, coating of it or paint or primer of the chassis frame. The weakest part is detected and may be strengthened accordingly. This way not only floor plate is changed, but the whole construction is checked and may be enhanced. Detachment according to at least some/all embodiments enables ensuring that the new replacing floor plate is attached to a good base and there are no weak points in the base solutions.

An adhesive joint between a floor plate and a chassis frame according to embodiments may enable using different floor plates. Floor plates need not be of uniform quality. For example, floor plates may comprise warps. Before attachment to a chassis according to embodiments, a floor plate may form a structure towards U- or J-form, where the floor plate may comprise bent structure so that two opposing end edge portions are at a different level(s) than the mid portion of the floor plate. Alternatively, a floor plate may form a cup like structure, where edge and/or corner portions are on different level(s) than the middle portion of the floor plate. A floor plate may have different kind of bent structure, where the surface of the floor plate is not smooth or at the same level, but some evenness occurs. According to embodiment, different kind of floor plates may be utilized. Although adhesive, like polyurethane, does not require pressing in order to attach, in at least some embodiments the floor plate is pressed towards the adhesive joint. The adhesive joint comprises certain thickness despite the external press due to the adhesive, adhesive tape and/or the elastic spacers. It is possible to utilize floor plates of non-uniform quality and still achieve a required quality for the end product. Amount of adhesive in the adhesive joint enables durable adhesion even for uneven floor plates. The adhesive joint has effect of controlling distance between chassis frame and floor plate. The spacers and/or the adhesive tape provide stability to the thickness of the adhesive joint. The floor plate is not in touch with the chassis frame. There may be different forces and stresses in different parts of the floor plates. The forces and stresses may hinder detachment of floor plates. With the at least some/all embodiments, causing local tensile stress over the adhesive joint, enables equal detachment even for floor plates having different properties or stresses or forces.

Local tensile stress caused over the adhesive joint according to embodiments make it easy, fast and handy to detach the floor plates from the chassis frame. The adhesive joint over which a local tensile stress is caused is cuttable. Cutting means will not stick to adhesive paste, or adhesive joint, but the local tensile stress will aid the cutting and/or detachment. This is especially usable when period of exchange is dense. Some trailers are made for back loaded use, for example. In such trailers the rearmost floor plates will wear the most during use. Thus the rearmost floor plates require periodical changing. The exchange is fast and easy according to the embodiments. While replacing a floor plate has taken hours, for example 5-6 hours in the past, with at least some/all embodiments of the invention the time taken for detaching an old floor plate and attaching a new one may be reduced to 1 hour, or to a fifth of the previous.

Many other constructional parts and details of the flooring according to the embodiments, as well as method for replacing, detaching and checking/testing such flooring can be carried out in ways differing from the above described examples, but being within the scope of the invention defined hereafter in the claims.

## Claims

1. Method for detaching a plywood floor plate for a freight transport vehicle from a chassis frame for a freight transport vehicle, wherein the plywood floor plate comprises veneers attached to each other, and detaching the plywood floor plate and the chassis frame attached to each other via an adhesive joint comprises causing local tensile stress between the plywood floor plate and the chassis frame.

2. Method according to the claim 1, wherein causing local tensile stress comprises causing tensile force over the adhesive joint.

3. Method according to any of the claims 1-2, wherein the local tensile stress is caused by drawing the adhesively attached plywood floor plate away from the chassis frame.

4. Method according to any of the claims 1-3, wherein the local tensile stress is caused by detaching means, wherein optionally the detaching means comprise at least one of a screw, a wedge, a jack, a lever mechanism or threads.

5. Method according to any of the claims 1-4, wherein the local tensile stress is caused by threads, and the method further comprises causing mechanical grip between the plywood and the threads.

6. Method according to any of the claims 1-5, comprising driving a screw through a plane of the plywood floor plate, against the chassis frame.

7. Method according to any of the claims 1-6, comprising driving a screw through a plane of the plywood, against the chassis frame, and causing a tensile force between the plywood floor plate and the chassis frame by the screw threads, wherein the tensile force is arranged to move the plywood floor plate apart from the chassis frame.

8. Method according to any of the claims 1-7, comprising placing a cutting tool between the plywood floor plate and the chassis frame comprising a tensile force between them, and wherein optionally the cutting tool comprises at least one of a cutting wire, a cutting knife, an oscillating tool, a wedge piece, and wherein optionally the cutting tool comprises a cutting edge.

9. Method according to any of the claims 1-8, comprising cutting the adhesive joint with a cutting tool.

10. Method according to any of the claims 1-9, comprising cutting the plywood floor plate in pieces before causing the local tensile stress between the plywood floor plate piece and the chassis frame.

11. A method according to any of the preceding claims, wherein the adhesive comprises polyurethane.

12. A method according to any of the preceding claims, wherein the plywood floor plate comprises a wood-base and a coating, optionally the coating comprising phenolic resin.

13. A method according to any of the preceding claims, wherein the chassis frame comprises metallic frame beams fastened to each other.

14. A method according to any of the preceding claims, wherein the plywood comprises veneers, wherein at least surface veneers comprise a density of 600 kg/m³ and/or wherein at least surface veneers comprise birch.

15. A method according to any of the preceding claims, wherein the plywood comprises veneers comprising a grain orientation, and wherein at least surface veneers and/or at least 5 veneer layers comprise cross oriented grains in relation to their adjacent veneers.

16. A method for testing an adhesive joint attachment between a plywood floor plate for a freight transport vehicle and a chassis frame for a freight transport vehicle, wherein the plywood floor plate comprises veneers attached to each other, and wherein testing the adhesive joint between the plywood floor plate and the chassis frame comprises causing local tensile stress between the plywood floor plate and the chassis frame for detaching them.

17. The method according to the claim 16, wherein the adhesive joint comprises an initial crack and the caused local tensile stress is arranged to proceed the initial crack in the adhesive joint, and optionally the method comprises tracing the proceeding of the crack.

18. A plywood floor plate for a freight transport vehicle, wherein the plywood floor plate comprises veneers attached to each other, wherein the veneers comprise a grain direction, wherein the plywood comprises veneers oriented such that at least surface veneers of the plywood and/or at least 5 veneer layers of the plywood comprise cross oriented grains in relation to their adjacent veneers, and wherein the plywood floor plate is arranged attachable to a chassis frame of the freight transport vehicle and detachable according to any of the methods 1-15.
